# EUROPEAN PATENT APPLICATION

(11) **EP 1 772 982 A1**
(43) Date of publication of application: **11.04.2007**
(21) Application number: 05762036.1
(22) Date of filing: 22.07.2005
(51) Int. Cl.: H04J 11/00, H04B 7/08

(54) **DIVERSITY TYPE RECEIVER APPARATUS AND RECEIVING METHOD**

(30) Priority: 28.07.2004 JP 2004219743
(71) Applicant: MATSUSHITA ELECTRIC INDUSTRIAL CO., LTD., Osaka 571-8501 (JP)
(72) Inventor: TANIGUCHI, Tomohiko, Osaka-shi, Osaka 538-0035 (JP); TOIYAMA, Keiichi, Osaka 562-0005 (JP); UEDA, Kazuya, Osaka 573-0066 (JP)
(74) Representative: Pautex Schneider, Nicole Véronique
(86) International application number: PCT/JP2005/013481
(87) International publication number: WO 2006/011424

(57) **Abstract**

The diversity receiving apparatus of the present invention can arbitrarily determine the master branch which is the reference to synchronize the output timing among the symbols of the signals received by a plurality of branches depending on the receiving condition. This structure allows the master branch to be replaced with another branch in excellent receiving condition when the master branch gets into bad receiving condition or when the antenna signal wire on the master side comes off or breaks, thereby achieving the selection and synthesis of carriers.

## Description

### TECHNICAL FIELD

The present invention relates to an apparatus and method for diversity reception of data signal sequences which are modulated and demodulated by a digital multilevel modulation system.

### BACKGROUND ART

Diversity reception is often used for stable reception of terrestrial broadcasts in mobile devices such as cars and mobile phones.

Diversity reception systems include space diversity systems which use differences in spatial arrangement between transmitting and receiving antennas; time diversity systems which transmit the same signal a plurality of times to increase the chance of reception; frequency diversity systems which transmit the same signal in a plurality of frequency bands so as to stabilize the reception in one of the frequency bands by using the property that different frequency bands have different phasing probabilities; and polarization diversity systems which use differences in polarization properties between transmitting signals.

Of these types of diversity systems, the time diversity, frequency diversity and polarization diversity systems require the transmitting side to transmit the same information either a plurality of times or by using a plurality of means. Therefore, for the purpose of improving the property of receiving terrestrial broadcasts, space diversity systems, which can be achieved by changing the reception style on the receiving side, are more used for the effective use of limited frequency resources than the other types of diversity systems.

In a space diversity system that is in actual use, when an analog TV broadcast is received in a moving car having a plurality of antennas, the signal having the highest received signal level is selected from among the plurality of received signals.

For the meantime, broadcasting digitalization is in progress; for example, Japan and Europe have adopted an Orthogonal Frequency Division Multiplexing" (hereinafter, OFDM) transmission system as a digital terrestrial TV broadcasting system. The OFDM transmission system is described, for example, in lines 2 to 9 of "Overview of the ISDB-T system" on page 8, chapter 2 of "Transmission System for Digital Terrestrial Television Broadcast" ARIB STD-B31 Version 1. 1 published by ARIB (Association of Radio Industries and Businesses).

In a case where a space diversity reception system is applied to the OFDM-modulated signals described above, signals are received by a plurality of antennas, and are separately subjected to A/D conversion, synchronous detection, FFT calculation and demodulation. Consequently, each of the signals received by the plurality of antennas is formed into a modulated OFDM signal consisting of a larger number of carriers.

In space diversity reception systems, it is most effective to process signals received by a plurality of antennas OFDM-carrier by OFDM-carrier. More specifically, either the optimum signal is selected from among the signals received by a plurality of antennas OFDM-carrier by OFDM-carrier, or the signals received by the plurality of antennas are synthesized OFDM-carrier by OFDM-carrier.

In the aforementioned diversity reception system which demodulates the signal components in the OFDM carriers of received OFDM signals, and selects and synthesizes the same number of OFDM carriers as the number of antennas, the selection and synthesis must be performed by using the same data.

However, in a mobile reception environment, it is expected that a plurality of the receiving antennas receive signals that have passed through different propagation paths, so that the plurality of signals received are not necessarily obtained at the same timing.

Each OFDM signal contains a signal to eliminate the interference from the preceding and subsequent symbols, the signal being is called a guard interval. The signal in the guard interval is a copy of part of the effective symbol period of the OFDM signal, so that signal continuity is maintained between the guard interval and the effective symbol period. Therefore, when a received signal in the time domain is converted to a signal in the frequency domain, a signal corresponding to one symbol period of the OFDM signal is extracted from the OFDM symbol period (the guard interval + the effective symbol period), and is subjected to frequency conversion.

The signal corresponding to one symbol period of an OFDM signal is extracted by choosing a period least affected by the interference from the preceding and subsequent symbols. This may cause the selected symbol period to be different depending on the delay time and magnitude of the delayed wave contained in each OFDM signal. As a result, OFDM signals are subjected to frequency conversion at different timings, and consequently, demodulation units may receive signals at different timings.

In a diversity reception system which selects and synthesizes OFDM signals carrier by carrier, one of a plurality of branches is a master branch, and the other branch is a slave branch. In this system, the synchronous timing of the OFDM symbol of the master branch is first detected (for example, detected by notifying a processing unit at a later stage of the symbol head by using a pulse signal). Then, the synchronous timing of the OFDM symbol detected from the slave branch is synchronized with the synchronous timing of the OFDM symbol of the master branch. Thus, the timing of the signal of the master branch and the timing of the signal of the slave branch are synchronized in selecting and synthesizing the carriers.

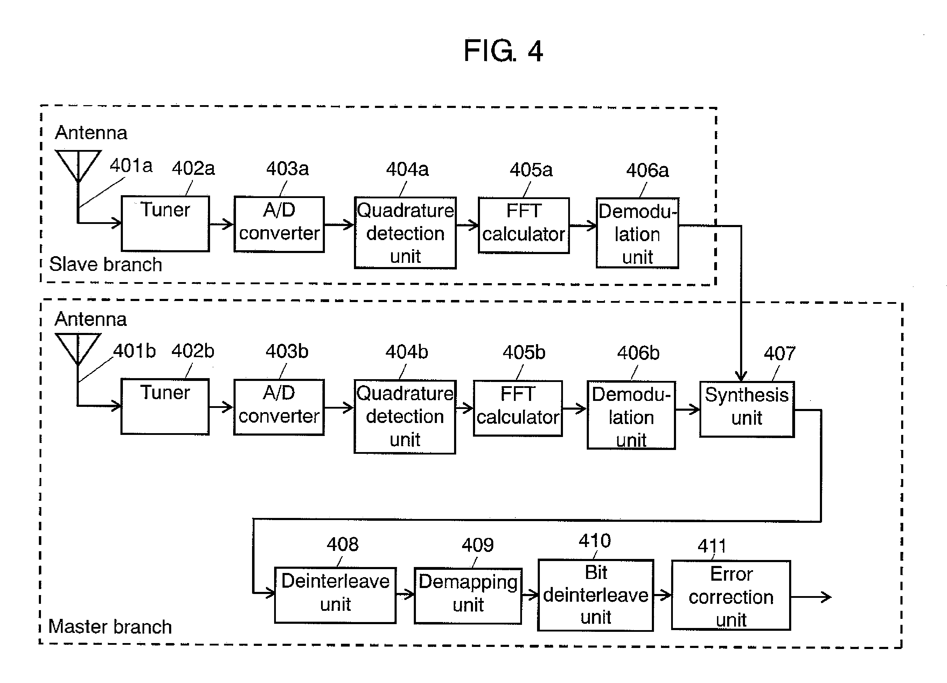

Fig. 4 is a block diagram showing the structure of a conventional diversity receiving apparatus.

In Fig. 4, quadrature detection units 404a and 404b each detect an OFDM signal; calculate the frequency error between the carrier frequency of the transmitting signal and the frequency reference signal of the diversity receiving apparatus; correct the frequency of the frequency reference signal of the diversity receiving apparatus, and determine the transmission mode of the OFDM signal and the length of the guard interval. Quadrature detection units 404a and 404b also each extract a signal in the effective symbol period from the OFDM signal and output it to FFT calculators 405a and 405b, respectively. Quadrature detection units 404a and 404b also each output a signal indicating synchronization establishment.

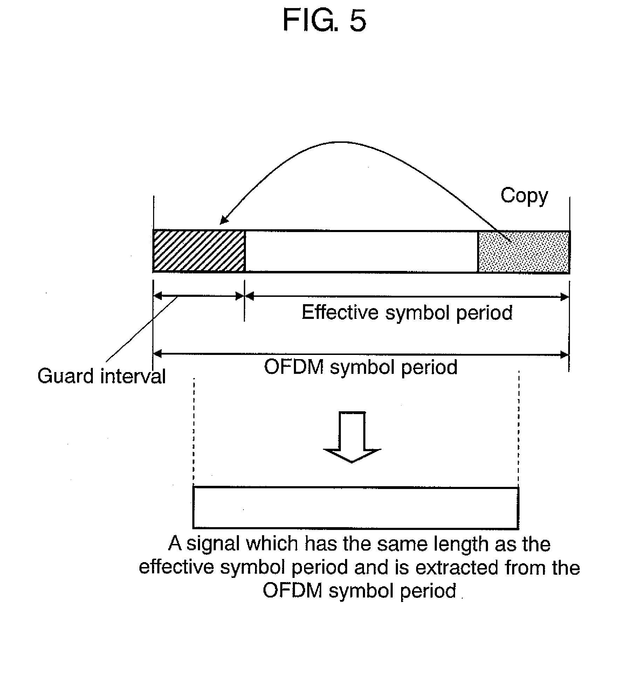

Fig. 5 shows the structure of a conventional OFDM symbol period.

As shown in Fig. 5, the OFDM symbol period contains a signal at its head as the signal in the guard interval. The signal at its head is a copy of the signal at the tail of the effective symbol period.

Since the signal in the guard interval is a copy of the signal in the effective symbol period, the signal continuity is maintained between the guard interval and the effective symbol period. This allows a signal having the same length as the effective symbol period to be extracted arbitrarily from a combined period of the guard interval and the effective symbol period, and to be outputted to FFT calculators 405a and 405b.

However, in reality, OFDM signals are affected by the transmission path between a transmitting antenna and a receiving antenna. In a multipath environment, for example, an OFDM signal is interfered by the preceding and subsequent OFDM signals. Therefore, it is necessary to select as the effective symbol period a period which is interfered as little as possible by the preceding and subsequent OFDM signals.

One approach to extract a signal in the effective symbol period from an OFDM signal is to determine the optimum period through the calculation of the correlation between the signal in the guard interval and the signal in the effective symbol period by making use of the property that the signal in the guard interval is a copy of the signal in the effective symbol period.

FFT calculators 405a and 405b each perform FFT calculation of the signal in the effective symbol period received from quadrature detection units 404a and 404b, respectively, and output FFT calculation results. The FFT calculation results are determined by the number of FFT points in the FFT calculation.

The number of FFT points is larger than the number of carriers in an OFDM signal. For example, when an OFDM signal is made up of several thousands of OFDM carriers, FFT calculators 405a and 405b perform 8192-point FFT calculation. As a result of this FFT calculation, 8192 complex signals are outputted as the calculation results where each complex signal indicates one OFDM carrier signal.

FFT calculators 405a and 405b each output 8192 FFT calculation results sequentially, for example, in order of descending or ascending OFDM carrier frequencies. FFT calculators 405a and 405b also each output a timing signal in such a manner that it is possible to determine to which OFDM carrier each FFT calculation result corresponds at a process at a later stage.

Demodulation units 406a and 406b each receive the FFT calculation results of the OFDM signal from FFT calculators 405a and 406b, respectively.

First of all, demodulation units 406a and 406b each extract and demodulate a TMCC (Transmission and Multiplexing Configuration and Control) signal inserted in the OFDM signal. As a result, demodulation units 406a and 406b obtain various parameters of the OFDM signal.

The various parameters of the OFDM signal include information such as transmission mode, carrier modulation system, coding rate, hierarchical information, time interleave length and symbol number, which are essential to subject the OFDM signal to a demodulation process, a deinterleave process and an error correction process.

Then, demodulation units 406a and 406b each extract pilot signals previously embedded in the OFDM signal from the signal as the FFT calculation results, and estimates the transmission characteristics of the propagation path through which the received OFDM signal has propagated.

Then, the FFT calculation results are divided by the estimated transmission characteristics so as to perform a demodulation process.

Demodulation units 406a and 406b also each receive the timing signal from FFT calculators 405a and 405b, respectively, and output the timing signal by delaying it by a processing delay time in the demodulation units. Separately from the timing signal, demodulation units 406a and 406b also each output information about the electric power and amplitude of the OFDM carrier containing the OFDM signal from the estimated results of the transmission characteristics.

Synthesis unit 407 receives complex signals as the demodulation results from demodulation units 406a and 406b. Synthesis unit 407 also receives the timing signals, separately from the complex signals.

The following will describe a case where signals are received by using antenna 401a through demodulation unit 406a as the master branch, and antenna 401b through demodulation unit 406b as a slave branch.

Synthesis unit 407 receives the complex signals as the demodulation results from each of the master branch and the slave branch, and performs a synthesizing process of the complex signals of these branches. The synthesis must be performed between complex signals having the same symbol and the same OFDM carrier. This makes it necessary to detect the time difference between a signal of the master branch and a signal of the slave branch from the timing signals received from demodulation units 406a and 406b, and to correct the time difference.

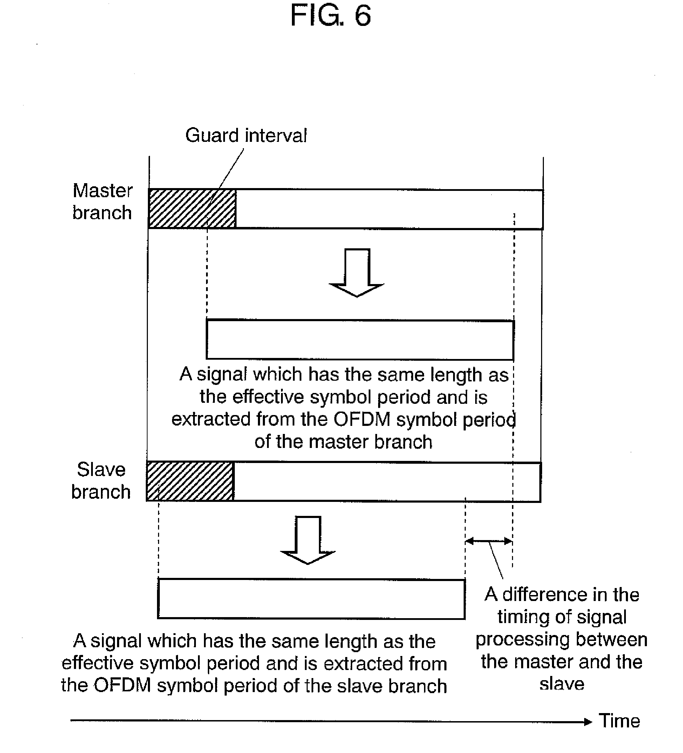

The cause of the time difference between a signal of the master branch and a signal of the slave branch will be described as follows with Fig. 6.

Fig. 6 is a view to explain the extraction of an OFDM signal in the effective symbol period by each of quadrature detection units 404a and 404b, and shows the OFDM signal of the master branch and the OFDM signal of the slave branch. In Fig. 6, the horizontal direction represents time.

When the master branch and the slave branch determine the timing of extracting the respective OFDM signals independently of each other, as shown in Fig. 6, the master branch and the slave branch may extract the OFDM signals at different timings from each other. Unless either FFT calculators 405a and 405b or demodulation units 406a and 406b perform timing adjustment, the difference in the timing of extracting the OFDM signals causes synthesis unit 407 to receive the OFDM signals at different timings between the master and slave branches.

The aforementioned timing difference can be accommodated by temporarily storing the signals of the master and slave branches in a memory or the like, and taking them out at a time when both signals of the master and slave branches can be securely obtained. For example, the maximum timing difference in extracting the OFDM signals is regarded as the length of the guard interval, and the signal of the master branch is taken out by delaying it by the length of the guard interval. At the same time as the signal of the master branch is taken out, the signal of the slave branch having the same OFDM carrier is taken out.

Synthesis unit 407 synthesizes the complex signals received from demodulation units 406a and 406b.

In the synthesis, synthesis unit 407a performs a weighting process to the complex signals and sums them up based on the electric power information and amplitude information of the OFDM carriers containing the received signals, which have been calculated by demodulation units 406a and 406b. The electric power information and amplitude information may be quantized values. The electric power information and amplitude information used in the weighting process are also required to be subjected to the same delay adjustment as the complex signals.

However, a system like this where one of a plurality of branches is the master branch and the other is a slave branch has the following inconvenience. When the synchronous timing of the OFDM symbol of the master branch cannot be detected because the master branch gets into extremely bad receiving condition, or because of the coming off or breakage of the antenna signal wire on the master side, even if the slave branch is in good receiving condition, it becomes impossible to synchronize the timing between the master branch and the slave branch. This makes it impossible to select or synthesize carriers.

The cause of this inconvenience is as follows. In synthesis unit 407 shown in Fig. 4, in order to adjust the timing difference between the signal from the master branch and the signal from the slave branch, the signal from the master branch is delayed for a certain time, and the signal from the slave branch which is already delayed separately is taken out at the same timing as the signal from the master branch.

When the receiving condition of the master branch is too deteriorated to extract an OFDM signal corresponding to the effective symbol, the synthesis unit cannot receive the timing signal which is used as the reference. This makes it difficult to synthesize signals even when the slave branch is in good receiving condition.

For this reason, adopting a diversity receiving system worsens the receiving condition.

When the synchronous timing of the OFDM symbol of the master branch cannot be detected, it is also impossible to obtain information such as the transmission parameters of a signal being received. This makes it impossible, for example, to perform error correction in an error correction unit at a later stage.

### SUMMARY OF THE INVENTION

In order to solve the aforementioned problems, the diversity receiving apparatus of the present invention includes: a plurality of demodulation units each provided for each of the plurality of branches, the plurality of demodulation units each outputting complex information indicating the signal point of each of the signals received by the plurality of branches; a master branch determination unit for determining the master branch which is used as the reference in synchronizing the output timing among the symbols of the signals received by the plurality of branches, and for outputting a signal indicating the branch determined to be the master branch; a timing adjustment unit for receiving the signal indicating the branch determined to be the master branch from the master branch determination unit, and for adjusting the timing of synthesizing the signals received by the plurality of branches by synchronizing the output timing between the symbol of the complex information received from the demodulation unit of the master branch and the symbol of the complex information received from the demodulation unit of a branch other than the master branch out of the plurality of antennas; and a synthesis unit for synthesizing the signals received by the plurality of branches by using the complex information that has been timing-adjusted by the timing adjustment unit.

The diversity receiving apparatus of the present invention allows, when the master branch gets into bad receiving condition or when the antenna signal wire on the master side comes off or breaks, to replace the master branch with an optimum branch so as to synchronize the timing between the master branch and the slave branch.

### BRIEF DESCRIPTION OF THE DRAWINGS

Fig. 1 is a block diagram showing a structure of a diversity receiving apparatus of a first embodiment of the present invention.
Fig. 2 is a view showing a method for restoring bit data in the first embodiment of the present invention.
Fig. 3 is a flowchart showing an operation of determining a master branch in the first embodiment of the present invention.
Fig. 4 is a block diagram showing a structure of a conventional diversity receiving apparatus.
Fig. 5 is a view showing a structure of a conventional OFDM symbol period.
Fig. 6 is a view showing extraction of an OFDM signal in an effective symbol period by conventional quadrature detection units.

### REFERENCE MARKS IN THE DRAWINGS

- 101a, 101b: antenna
- 102a, 102b: tuner
- 103a, 103b: A/D converter
- 104a, 104b: quadrature detection unit
- 105a, 105b: FFT calculator
- 106a, 106b: demodulation unit
- 107: master branch determination unit
- 108: timing adjustment unit
- 109: synthesis unit
- 110: transmission parameter storage unit
- 111: deinterleave unit
- 112: demapping unit
- 113: bit deinterleave unit
- 114: error correction unit

### DETAILED DESCRIPTION OF PREFERRED EMBODIMENT

A diversity receiving method of an embodiment of the present invention will be described as follows, with reference to drawings.

### FIRST EXEMPLARY EMBODIMENT

First of all, an example of the structure of the receiving apparatus for realizing the diversity receiving method of the present invention will be described as follows.

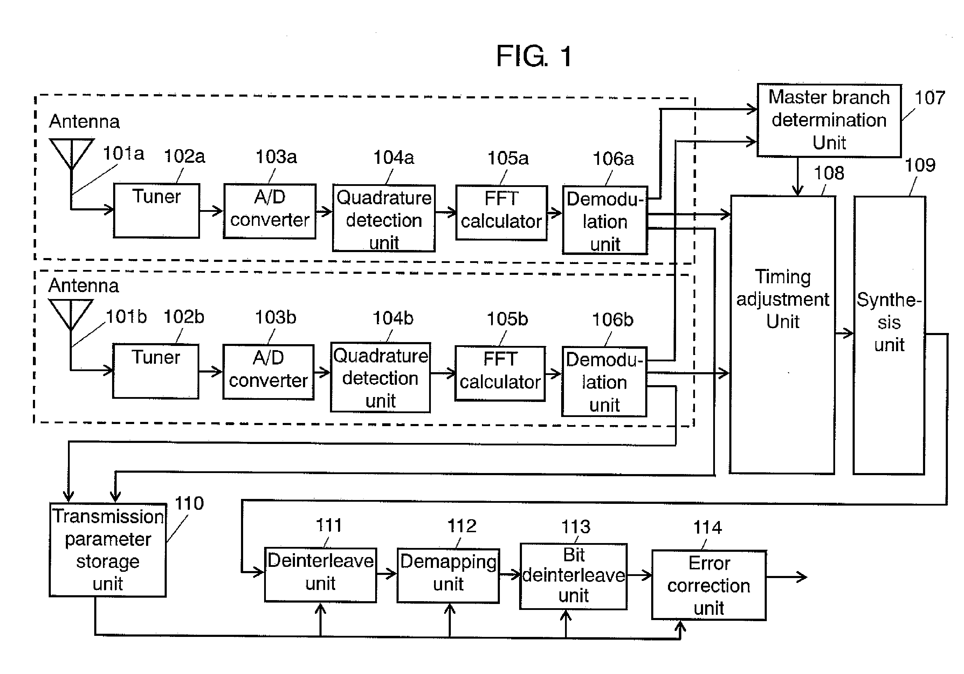

Fig. 1 is a block diagram showing the structure of the receiving apparatus of an embodiment of the present invention.

In Fig. 1, antenna 101a receives and converts a broadcasting wave transmitted from a broadcast station into an electric signal and outputs it. Tuner 102a extracts a signal at specific frequencies from the signal received from antenna 101a, and converts the extracted signal into a signal in the base band or at specific frequencies. Tuner 102a also outputs information about the average electric power of the received signal and information about fluctuation in the electric power.

A/D converter 103a converts an analog signal received from the tuner into a digital signal.

Quadrature detection unit 104a detects the OFDM signal, and calculates and corrects the frequency error between the transmitting signal and the frequency reference signal owned by demodulation unit 106a, thereby determining the transmission mode of the OFDM signal and the length of the guard interval. Quadrature detection unit 104a then extracts the signal in the effective symbol period from the OFDM signal, and outputs the extracted signal. Quadrature detection unit 104a also outputs a signal indicating synchronization establishment.

Each OFDM signal is made up of a signal in the guard interval and a signal in the effective symbol period. The signal in the guard interval is a signal at the tail of the effective symbol period and is added as it is in the guard interval which is ahead of the effective symbol period. In other words, the signal in the guard interval is a copy of part of an OFDM signal, so that the OFDM symbol period (the effective symbol period + the guard interval) contains the same signal repeatedly appearing at different positions. Calculating the correlation value of the OFDM signal in the time direction indicates that a high correlation is obtained when the information indicating the transmission mode and the information indicating the guard interval are detected, thereby determining the transmission mode and the guard length.

Quadrature detection unit 104a extracts only the signal corresponding to the effective symbol period, and transmits it to FFT calculator 105a which is provided at a later stage. Quadrature detection unit 104a regards the determination of the transmission mode and the guard length as the establishment of synchronization, and transmits a signal indicating the synchronization establishment to the subsequent stage.

FFT calculator 105a subjects the signal in the time domain of the OFDM symbol period received from quadrature detection unit 104a to an FFT calculation process so as to convert the signal into a signal in the frequency domain. FFT calculator 105a also outputs a timing signal so that it is possible to determine to which OFDM carrier each FFT calculation result corresponds at a process at a later stage.

Demodulation unit 106a demodulates a TMCC (Transmission and Multiplexing Configuration and Control) signal inserted in the OFDM signal so as to obtain various parameter information of the OFDM signal. The transmission parameter information includes transmission mode, carrier modulation system, coding rate, hierarchical information, and interleave length.

Demodulation unit 106a also extracts pilot signals located in the OFDM signal at regular intervals in the frequency and time directions. Demodulation unit 106a then compares the extracted pilot signals with the reference value (known amplitude and phase) so as to calculate the transmission characteristics (the degree of differences in amplitude and phase) of the carrier containing the pilot signals based on changes in amplitude and phase. Demodulation unit 106a then interpolates the transmission characteristics of the carrier containing the pilot signals, which have been calculated by the pilot extraction unit, in the time and frequency directions. Thus, demodulation unit 106a calculates and outputs the estimate of the transmission characteristics of all the OFDM carriers. The interpolation is performed by using the transmission characteristics of the pilot carriers and in such a manner that the transmission characteristics increase or decrease in accordance with the number of data carriers existing between the pilot carriers, or are kept at an average value. Demodulation unit 106a then divides the signal received from FFT calculator 105a by the estimate of the transmission characteristics so as to found a complex signal based on the division result and outputs it to timing adjustment unit 108.

Demodulation unit 106a also outputs, to timing adjustment unit 108, electric power information indicating the amount of electric power of each OFDM carrier and amplitude information indicating the amount of amplitude of each OFDM carrier which are calculated by using the transmission characteristics estimated from the pilot signals. Demodulation unit 106a also calculates and outputs the average amount of noise contained in the received signal. The average amount of noise can be calculated from the average of square values of the distances between received signal points (the complex signals after the division) and the mapping points.

Components 101b to 106b have the same structures as components 101a to 106a, respectively, so that their individual description will be omitted.

Master branch determination unit 107 determines the optimum master branch by using the signals indicating the synchronization establishment received from quadrature detection units 104a and 104b, and the information about average electric power and the information about the fluctuation in the electric power received from tuners 102a and 102b. Master branch determination unit 107 then transmits a signal indicating the branch determined to be the master branch to timing adjustment unit 108.

The operation to determine the master branch by master branch determination unit 107 will be described later.

Timing adjustment unit 108 temporarily buffers a complex signal received from demodulation unit 106a (or 106b) of the master branch determined by master branch determination unit 107. Timing adjustment unit 108 then provides a delay in consideration of the timing difference between the received signals. The delay can be as long as, for example, the guard interval or the OFDM symbol period. Timing adjustment unit 108 also buffers the complex signal received from the slave branch, and takes it out at the same timing as the signal of the master branch.

Timing adjustment unit 108 detects the timing difference between the signal of the master branch and the signal of the slave branch from the difference between the timing signal of the master branch and the timing signal of the slave branch received from FFT calculator 105a (or 105b).

When the delay time is as long as the OFDM symbol period, it is necessary for timing adjustment unit 108 to obtain a signal indicating a symbol number in addition to the timing signal so as to prevent the synthesis of OFDM signals at different positions in the sequence. It is of course possible for timing adjustment unit 108 to receive and compare the symbol numbers even when the delay time is as long as the guard interval. The reason to make the delay time about as long as the guard interval is that the maximum timing difference in extracting an OFDM signal by quadrature detection unit 104a (or 104b) is assumed to be about as long as the guard interval. Synthesizing signals in consideration of symbol number can prevent the synthesis of signals contained in different symbols, even when a timing difference larger than expected is caused for some reasons.

Timing adjustment unit 108 outputs the complex signals that have subjected to the timing adjustment to synthesis unit 109. Timing adjustment unit 108 may have a memory for temporarily storing the complex signals received from the master and slave branches so as to make the memory perform the timing adjustment.

Synthesis unit 109 receives from timing adjustment unit 108 the complex signals subjected to the timing adjustment, the electric power information and the amplitude information. Synthesis unit 109 then synthesizes the complex signals obtained from demodulation units 106a and 106b. In the synthesis, synthesis unit 109 performs a weighting process to the complex signals and sums them up based on the electric power information and amplitude information of the carriers containing the received signals, which have been calculated by demodulation units 106a and 106b. The electric power information and the amplitude information may be quantized values.

Synthesis unit 109 outputs the complex information and reliability information of synthesized received signal points to deinterleave unit 111 provided at a later stage. As the reliability information, the largest value of the power information about the signals used for the synthesis is outputted.

Transmission parameter storage unit 110 receives a signal indicating synchronization establishment from each of quadrature detection units 104a and 104b, and also receives a signal indicating transmission parameters from each of demodulation units 106a and 106b. Transmission parameter storage unit 110 then outputs the transmission parameter information received from a branch which has established synchronization, whether it is the master branch or the slave branch, to later-stage blocks (deinterleave unit 111, demapping unit 112, bit deinterleave unit 113, and error detection unit 114). Thus transmitting the transmission parameters to the later-stage blocks whether it is in the master branch or the slave branch by transmission parameter storage unit 110 allows the synthesized complex signal to be decoded even when the master branch has been replaced.

Since transmission parameters other than symbol number do not change often in this case, it is alternatively possible to maintain the parameters obtained after channel selection. It is also possible to check changes in the parameters periodically, and to update any changes.

Transmission parameter storage unit 110 can receive a signal indicating that a TMCC signal has been decoded from demodulation unit 106a (or 106b), instead of receiving the signal indicating synchronization establishment from each of quadrature detection units 104a and 104b, and can output the transmission parameter information received from a branch having a decoded TMCC signal to the later-stage blocks.

As an approach to transmit the transmission parameter information to the later-stage blocks (deinterleave unit 111, demapping unit 112, bit deinterleave unit 113 and error correction unit 114), it is possible to multiply the transmission parameter information in a data signal line, instead of providing a separate signal line. This approach is possible because although the number of output signals of FFT calculators 105a and 105b corresponds to the number of points in the FFT calculation, the total number of the OFDM carriers is smaller than the number of points in the FFT calculation, thereby generating an ineffective period in the data. For example, when the transmission parameters are mode 3, the number of FFT points is 8192, and the total number of the OFDM carriers is 5717. This means that 2575 (8192-5717) data points are not needed at the later stages. In a structure where 8192 data points are outputted sequentially from the FFT calculators, part of the ineffective period in the data can be replaced with the transmission parameters and extracted at a later-stage block.

Deinterleave unit 111 sorts the complex signals in the synthesized received signal points received from synthesis unit 109 in the frequency and time directions. The sorting method is defined in advance and the sort is performed to clear the sort done on the transmitting side so as to restore the original order. Deinterleave unit 111 receives information about the interleave length and segment number for each hierarchical level and information about the presence or absence of a hierarchical level of partial reception from transmission parameter storage unit 110. Deinterleave unit 111 then sorts data in accordance with the parameter of the length of the time interleave of each hierarchical level.

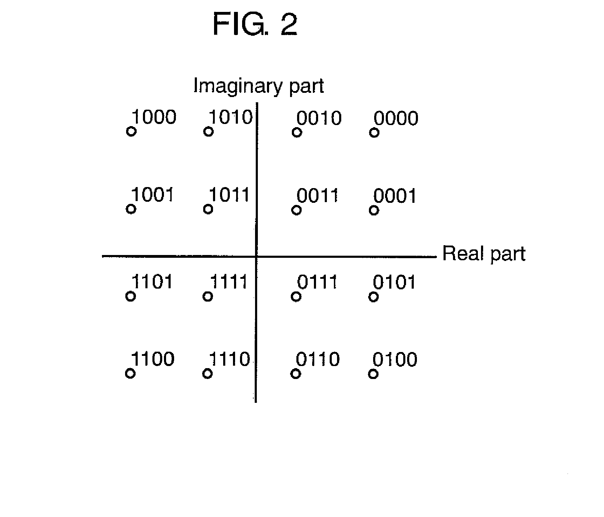

Demapping unit 112 restores the bit data of the signals based on the information of the received signal points obtained from deinterleave unit 111. The demodulation is performed by determining the number of segments in each hierarchical level and the carrier modulation system from the transmission parameters outputted from transmission parameter storage unit 110. The restoration of the bit data is performed on the assumption that the code string assigned to the mapping point closest to a received signal point is the transmitting code string. For example, when a received signal is carrier modulated at 16 QAM, the bit data is restored in accordance with the rule shown in Fig. 2. Demapping unit 112 calculates for each bit the shortest distance between a mapping point where the transmission code is 0 and a mapping point where the transmission code is 1 with respect to a received signal point, and transmits a value determined by the distance as a likelihood (0 likelihood or 1 likelihood) to the error correction unit at the later stage (called "soft decision").

Demapping unit 112 then corrects the calculated likelihood by using the reliability information received from synthesis unit 109 through deinterleave unit 111. When synthesis unit 109 determines that the reliability is low, demapping unit 112 corrects the likelihood to 0 (0 likelihood and 1 likelihood are equal to each other). On the other hand, when synthesis unit 109 determines that the reliability is high, demapping unit 112 outputs the calculated likelihood with no corrections. Alternatively, demapping unit 112 outputs the reliability value, which is the electric power information and amplitude information of the carrier received from synthesis unit 109, after multiplying the reliability value with the likelihood calculated earlier.

As described above, demapping unit 112 outputs the bit data stream calculated from the information of the received point obtained from synthesis unit 109, and the calculated likelihood for each bit.

Bit deinterleave unit 113 then sorts the outputs of demapping unit 112. The sorting method is defined in advance, and the sort is performed to clear the sort done on the transmitting side so as to restore the original order.

Error correction unit 114 performs error correction, based on the information about segment number and carrier modulation system and the information about error correction coding rate, which are received from transmission parameter storage unit 110, and by using the bit data stream received from bit deinterleave unit 113 and the information about the likelihood of each bit data. In such error correction, an error correcting method called "viterbi decoding" is often used, and is often combined with "Reed-Solomon error correction code"; however, this is not the only error correction possible and any other error corrections can be used as long as the aforementioned likelihood is used.

The structure of the diversity receiving apparatus of the first embodiment of the present invention has been thus described hereinabove.

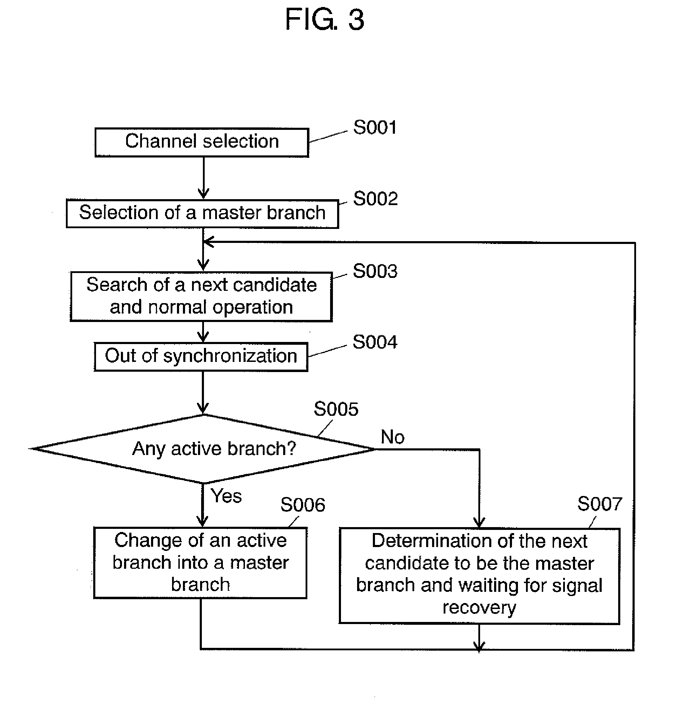

The operation for the diversity receiving apparatus to determine the master branch will be described as follows with reference to the flowchart of Fig. 3.

First of all, when the diversity receiving apparatus of the present invention is powered on or selects a channel (Step S001), master branch determination unit 107 determines the master branch by using the signal indicating synchronization establishment received from each of quadrature detection units 104a and 104b (Step S002). More specifically, master branch determination unit 107 compares the times when the signals indicating synchronization establishment are received from quadrature detection units 104a and 104b, and selects as the master branch the branch from which the signal indicating synchronization establishment has been received earlier than the other after the power on or the channel selection.

As an alternative approach to determine the master branch, master branch determination unit 107 can use the information about the average electric power of a received signal and the information about fluctuation in the electric power obtained from tuners 102a and 102b. More specifically, the branch having the highest average electric power of the received signal can be determined to be the master branch, or the branch performing stable reception with the least fluctuation in the electric power of the received signal can be determined to be the master branch, thereby selecting a branch which is considered to be in the best receiving condition as the master branch. By using the signal of the branch determined to be the master branch as the reference, timing adjustment unit 108 at the subsequent stage can perform timing adjustment.

As another alternative approach to determine the master branch, master branch determination unit 107 can receive data indicating the average amount of noise from demodulation units 106a and 106b, and discriminate the branch having the least average amount of noise.

In the case of a diversity receiving apparatus having a plurality of antennas with directional characteristics, the branch having an antenna with directional characteristics in the direction of a transmitting station can be determined to be the master branch. In this case, however, determining which antenna is in the direction of the transmitting station requires the following procedure: to combine a GPS (Global Positioning System) capable of calculating the positional relation between the diversity receiver and the transmitting station with a gyro sensor or the like capable of detecting the direction of the diversity receiver; and to input the positional and directional information from these devices to master branch determination unit 107 of the diversity receiving apparatus of the present invention. For example, in the case of a diversity receiver used in a car navigation system, the position and direction of a transmitting station can be found by the GPS and sensor in the car navigation system. Therefore, the information can be inputted from the car navigation system to master branch determination unit 107 of the diversity receiving apparatus of the present invention to discriminate the antenna having directional characteristics in the direction of the transmitting station, thereby determining the master branch. In the case of a car navigation system, a mobile phone or a mobile computer with a GPS, the direction of the diversity receiving apparatus is frequently changed according to the direction of the car or the user. This makes it possible to determine the master branch by storing the past information about the direction of the diversity receiving apparatus in a memory and by using the mean value to calculate the direction in which the car or the user has stayed longest for a certain period.

When the diversity receiving apparatus of the present invention is combined with a car navigation system, a mobile phone and a mobile computer, the master branch can be determined by another method. For example, a memory or HDD in these devices can store the master branch that was receiving a signal; the branch that was having the highest average electric power of the received signal; or the branch that was having the least fluctuation in the electric power of the received signal the last time the car or the user passed through a certain point. Then, the information is outputted to master branch determination unit 107 of the diversity receiving apparatus of the present invention when the car or the user passes through the same point, so that master branch determination unit 107 can determine the branch to be the master branch. It is alternatively possible to use a recording medium such as a CD-ROM, DVD or SD memory card to store the information in order to determine the master branch.

As further another alternative approach to determine the master branch, the diversity receiving apparatus of the present invention can be combined with a car navigation system, a mobile phone or a mobile computer having a communication unit capable of bidirectional communication. The relationship between the point at which the diversity receiving apparatus exists and the branch to be the master branch are accumulated in a server communicable with the car navigation system or the like, and the accumulated information is used in determining the master branch. In this case, master branch determination unit 107 of the diversity receiving apparatus of the present invention can upload the latest information via the car navigation system or the like either continuously or at regular intervals. This allows the car navigation system or the like to determine the master branch based on the latest information when the car navigation system or the like passes through the same point later.

Master branch determination unit 107 transmits a signal indicating the master branch thus determined to timing adjustment unit 108. Timing adjustment unit 108 temporarily buffers a complex signal received from demodulation unit 106a (or 106b) of the master branch according to the signal indicating the master branch, takes the complex signal out at the same timing as the complex signal received from demodulation unit 106b (or 106a) of the slave branch, and outputs these complex signals to synthesis unit 109.

Although the master branch is determined in this manner, in the case of a car navigation system, a mobile phone, a mobile computer and the like, the directions of the antennas of the diversity receiving apparatus change frequently in accordance with the direction of the transmitting antenna, so that the branches are not in the same receiving condition. When the master branch gets into bad receiving condition, it becomes impossible to receive the timing signal from the master branch, which is used as the reference timing in adjustment unit 108. This may cause a timing difference in the synthesis. Furthermore, the antenna wire of the master branch may be broken due to corrosion or an accident. In view of such cases, master branch determination unit 107 determines a next candidate for the master branch after the determination of the master branch (Step S003).

The determination of the next candidate for the master branch is performed in the same manner as the determination of the master branch described above, and a signal indicating the branch that has been searched for as the next candidate for the master branch is stored in a buffer unit or a memory unit provided either inside or outside of master branch determination unit 107.

When the initially selected master branch causes a loss of synchronization due to the aforementioned causes during the reception of a broadcasting wave (Step S004), master branch determination unit 107 transmits the signal indicating the branch determined to be the next candidate for the master branch to timing adjustment unit 108. Timing adjustment unit 108 temporarily buffers a complex signal received from demodulation unit 106b (or 106a) of the next candidate for the master branch, takes out the complex signal at the same timing as the complex signal received from demodulation unit 106a (or 106b) of the slave branch, and outputs these complex signals to synthesis unit 109.

When the car or the user enters a tunnel while using the car navigation system or the mobile phone, the broadcasting wave cannot be received for a certain period. In such a case, even if the next candidate for the master branch is already determined as described above, the next candidate for the master branch may not be able to receive the broadcasting wave, either. In this case, master branch determination unit 107 searches for active branches (Step S005) and selects a master branch from among the active branches (Step S006). When finding no active branch, master branch determination unit 107 determines the next candidate for the master branch again, and outputs the signal indicating the next candidate for the master branch to timing adjustment unit 108. Timing adjustment unit 108 waits for the master branch to restore the reception of the broadcasting wave (Step S007).

When no active branch is found at Step S005, master branch determination unit 107 determines the branch that was the last to be in synchronization (immediately before the occurrence of reception interruption) to be the master branch, based on the past receiving condition. This makes it possible to prepare as the master branch the branch which is expected to be in the best receiving condition when the reception is resumed. As an alternative approach to determine the master branch, it is possible to compare the average electric power received or fluctuation in the electric power received within a certain period in the past among the branches, based on the past receiving condition, and then to select the branch having the highest average electric power received or the branch having the least fluctuation in the electric power received. For the determination of the master branch based on the past conditions such as synchronization establishment, master branch determination unit 107 is required to have a buffer unit or a memory unit for storing the past conditions such as synchronization establishment either inside or outside it.

Since the condition of receiving a broadcasting wave changes by the minute while the car or the user is moving, master branch determination unit 107 may determine the next candidate for the master branch periodically and output the signal indicating the master branch periodically to timing adjustment unit 108, and timing adjustment unit 108 may change the master branch periodically in response to this, thereby adjusting the timing between the branches. This achieves flexible replacement of the master branch in accordance with the condition of receiving a broadcasting wave. In this case, the timing to replace the master branch can be determined freely depending on the type of the diversity receiving apparatus, such as a car navigation system, a mobile phone or a mobile computer.

As described hereinbefore, the diversity receiving apparatus of the present invention can replace the master branch with the optimum branch when the master branch gets into bad receiving condition or when the antenna signal wire on the master side comes off or breaks, thereby achieving synchronization of the timing between the master and the slave.

Transmission parameters including information such as transmission mode, carrier modulation system, coding rate, hierarchical information and interleave length are received by transmission parameter storage unit 110 from demodulation unit 106a (or 106b) of the branch which has established synchronization, whether it is the master branch or the slave branch, and are outputted to deinterleave unit 111, demapping unit 112, bit deinterleave unit 113, and error correction unit 114. This allows the parameters used for demodulation to be transmitted to deinterleave unit 111 and other units whether it is in the master branch or the slave branch, when the master branch is going to be replaced due to the worsening receiving condition.

The first embodiment has thus described a diversity receiving apparatus having two branches with reference to Fig. 1; however, the apparatus may have three, four or any other number of antennas.

In addition, the present invention is not limited to the transmission system, and can be a multi-carrier transmission system with OFDM or a single carrier transmission system with VSB (VESTIGIAL SIDE BAND). There is also no limitation to the digital modulation system and can be 8 QAM, 16 QAM, 32 QAM, 64 QAM, 256 QAM, QPSK (Quadrature Phase Shift Keying) or the like.

The diversity receiving apparatus and method of the present invention have thus been described in the first embodiment. Receiving apparatuses such as a personal computer (PC), a television, a video recorder and a STB (Set-top Box) containing or connected with antennas can have the respective receiving methods incorporated therein as software, and make the CPU (Central Processing Unit) of the PC or the like process and execute the software, thereby achieving diversity reception for the selection and synthesis.

In order to make the CPU in the PC or the like process and execute the receiving method of the first embodiment, these methods can be stored to a recording medium such as a CD-ROM, as a program or data equivalent to a program in such a manner as to be processable by the CPU. As a result, the aforementioned methods can be achieved on a PC having a reader.

### INDUSTRIAL APPLICABILITY

The present invention is useful for maintaining the performance of reception in a diversity receiving apparatus.

## Claims

1. A diversity receiving apparatus for receiving signals carrier-modulated by a digital multilevel modulation system by a plurality of branches and for demodulating the signals, the diversity receiving apparatus comprising:
a plurality of demodulation units each provided for each of the plurality of branches, the plurality of demodulation units each outputting complex information indicating a signal point of each of the signals received by the plurality of branches;
a master branch determination unit for determining a master branch which is used as a reference in synchronizing an output timing among symbols of the signals received by the plurality of branches, and for outputting a signal indicating a branch determined to be the master branch;
a timing adjustment unit for receiving the signal indicating the branch determined to be the master branch from the master branch determination unit, and for adjusting a timing of synthesizing the signals received by the plurality of branches by synchronizing the output timing between a symbol of the complex information received from the demodulation unit of the master branch and a symbol of the complex information received from the demodulation unit of a branch other than the master branch out of the plurality of antennas; and
a synthesis unit for synthesizing the signals received by the plurality of branches by using the complex information that has been timing-adjusted by the timing adjustment unit.

2. The diversity receiving apparatus of claim 1 further comprising:
a transmission parameter storage unit, wherein
the plurality of demodulation units each extract a transmission parameter containing information necessary for demodulation from each of the signals received by the plurality of branches, and each output the transmission parameter in addition to the complex signal, and
the transmission parameter storage unit stores the transmission parameters outputted from the plurality of demodulation units.

3. The diversity receiving apparatus of claim 1 further comprising:
a plurality of quadrature detection units each provided for each of the plurality of branches, the plurality of quadrature detection units each outputting a signal indicating synchronization establishment of each of the signals received by the plurality of branches, wherein
the master branch determination unit determines a branch having the quadrature detection unit that is the first to input the signal indicating synchronization establishment to the master branch determination unit to be the master branch.

4. The diversity receiving apparatus of claim 1 further comprising:
a plurality of tuners each provided for each of the plurality of branches, the plurality of tuners each extracting a signal at specific frequencies from each of the signals received by the plurality of branches, and each outputting information about average electric power of each of the signals received by the plurality of branches, wherein
the master branch determination unit determines a branch having a highest average electric power of the signal received to be the master branch.

5. The diversity receiving apparatus of claim 1 further comprising:
a plurality of tuners each provided for each of the plurality of branches, the plurality of tuners each extracting a signal at specific frequencies from each of the signals received by the plurality of branches, and each outputting information about fluctuation in electric power of each of the signals received by the plurality of branches wherein,
the master branch determination unit determines a branch having least fluctuation in the electric power of the signal received to be the master branch.

6. The diversity receiving apparatus of claim 1, wherein
the plurality of demodulation units each calculate an average amount of noise from each of the signals received by the plurality of branches and each output the average amount of noise; and
the master branch determination unit determines a branch having least average amount of noise outputted from the demodulation unit to be the master branch.

7. The diversity receiving apparatus of claim 1, wherein
the plurality of branches each have an antenna with directional characteristics; and
the master branch determination unit determines a branch having an antenna with directional characteristics in a direction of a transmitting station to be the master branch.

8. The diversity receiving apparatus of claim 7 further comprising:
a GPS capable of locating a position of a receiving apparatus; and
a gyro sensor capable of locating a direction of a receiving apparatus, wherein
the master branch determination unit selects an antenna with directional characteristics in a direction of a transmitting station based on the GPS and the gyro sensor, and determines the antenna to be the master branch.

9. The diversity receiving apparatus of claim 1 further comprising:
a GPS capable of locating a position of the diversity receiving apparatus; and
a communication unit capable of bidirectional communication, wherein
the master branch determination unit transmits positional information of the diversity receiving apparatus located by the GPS to a server having information about master branch determination, and receives the information about master branch determination from the server, thereby determining a branch having an antenna with directional characteristics in a direction of a transmitting station to be the master branch.

10. The diversity receiving apparatus of claim 1 further comprising:
a reader capable of reading a recording medium which stores the information about master branch determination, wherein
the master branch determination unit determines a branch having an antenna with directional characteristics in a direction of a transmitting station to be the master branch, based on the information about master branch determination that has been read from the recording medium by the reader.

11. The diversity receiving apparatus of claim 1, wherein
the master branch determination unit determines a new master branch by selecting the new master branch among branches that can receive signals when the master branch gets into bad receiving condition and it becomes impossible to detect symbol synchronization.

12. The diversity receiving apparatus of claim 11, wherein
the master branch determination unit stores receiving status data before the master branch gets into bad receiving condition; and determines the new master branch based on the receiving status data.

13. The diversity receiving apparatus of claim 12, wherein
the master branch determination unit stores, as the receiving status data before the master branch gets into bad receiving condition, the signals each indicating synchronization establishment of each of the plurality of branches; and determines a branch that is the last to input the signal indicating synchronization establishment to the master branch determination unit before the master branch gets into bad receiving condition to be the new master branch.

14. The diversity receiving apparatus of claim 12, wherein
the master branch determination unit stores, as the receiving status data before the master branch gets into bad receiving condition, average electric power received by each of the plurality of branches; and determines a branch that has had highest average electric power received before the master branch gets into bad receiving condition to be the new master branch.

15. The diversity receiving apparatus of claim 12, wherein
the master branch determination unit stores, as the receiving status data before the master branch gets into bad receiving condition, fluctuation in electric power received by each of the plurality of branches; and determines a branch that has had least fluctuation in the electric power received before the master branch gets into bad receiving condition to be the new master branch.

16. The diversity receiving apparatus of claim 1, wherein
the master branch determination unit determines a new master branch even when it becomes impossible to detect symbol synchronization because the master branch gets into bad receiving condition, and there is no other branch that can receive a signal.

17. The diversity receiving apparatus of claim 2, wherein
the transmission parameter storage unit stores the transmission parameter that is the first to be outputted from the plurality of demodulation units after channel selection, the transmission parameter being used to demodulate the signal received by a corresponding one of the plurality of branches.

18. The diversity receiving apparatus of claim 2, wherein
the transmission parameter storage unit stores the transmission parameter that is the first to be outputted from the plurality of demodulation units after the reception is resumed, the transmission parameter being used to demodulate the signal received by a corresponding one of the plurality of branches.

19. A diversity receiving method for receiving signals carrier-modulated by a digital multilevel modulation system by a plurality of branches and for demodulating the signals, the diversity receiving method comprising:
a demodulation step for outputting complex information indicating signal points of the signals received by the plurality of branches; and
a master branch determination step for determining a master branch which is used as a reference in synchronizing an output timing among symbols of the signals received by the plurality of branches, and for outputting a signal indicating a branch determined to be the master branch.

20. The diversity receiving method of claim 19, wherein
the master branch determination step comprises:
a step for determining a next candidate for the master branch; and
a step for replacing a current master branch with the next candidate for the master branch when the current master branch gets into bad receiving condition.
